# EUROPEAN PATENT SPECIFICATION

(11) **EP 2 208 124 B1**
(45) Date of publication and mention of the grant of the patent: **09.10.2019**
(21) Application number: 08841140.0
(22) Date of filing: 22.10.2008
(51) Int. Cl.: G06F 1/32, B60R 16/02, H04L 12/12, H04L 12/40, H04L 12/46

(54) **SYSTEM AND METHOD FOR CHANGING THE STATE OF VEHICLE COMPONENTS**
SYSTEM UND VERFAHREN ZUR ÄNDERUNG DES STATUS VON FAHRZEUGTEILEN
SYSTÈME ET PROCÉDÉ POUR CHANGER L'ÉTAT DE COMPOSANTS DE VÉHICULE

(30) Priority: 22.10.2007 SE 0702360
(43) Date of publication of application: 21.07.2010
(73) Proprietor: Volvo Lastvagnar AB, 405 08 Göteborg (SE)
(72) Inventor: HONNER, Mats, S-437 31 Lindome (SE); ISAKSSON, Patrik, S-431 63 Molndal (SE); OHLSSON, Joakim, S-421 66 Västra Frölunda (SE); JARENMARK, Rolf, S-435 32 Mölnlycke (SE); SÖDERBERG, Jan, S-412 74 Göteborg (SE); WESTERLIND, Hans, S-449 40 Nol (SE); RÖNNLUND, Jan, S-434 36 Kungsbacka (SE); RIBERO, Raphael, FR-69390 Millery (FR); ALFERI, Rudi, S-112 39 Stockholm (SE)
(74) Representative: Kransell & Wennborg KB
(86) International application number: PCT/SE2008/000607
(87) International publication number: WO 2009/054769

(56) References cited:
- EP-A2- 1 158 718
- US-A1- 2003 223 436
- US-A1- 2004 078 126
- US-A1- 2006 013 237
- US-A1- 2006 013 237
- US-B2- 6 907 329

## Description

The present invention relates to an electronic/electric vehicle infrastructure system for controlling the electronic/electric functions and/or functionalities of a vehicle and a method for controlling such a system, wherein the electronic/electric vehicle infrastructure system comprises at least one electronic/electric vehicle infrastructure subsets each comprising a plurality of electronic/electric vehicle infrastructure elements, wherein an electronic/electric infrastructure element is an electronic control unit (ECU), a network segment and/or a load, and at least one electronic/electric vehicle infrastructure element is transferable in an active or inactive state, and wherein the activity of the electronic/electric functions and/or functionalities are defined by predetermined vehicle modes and/or predetermined application-specific contexts.

In order to reduce the power consumption in the vehicle, there is a need to develop infrastructure solutions that enable to fully power only electronic/electric infrastructure elements (ECUs, loads, network segments) that are required at the time. As vehicle functionality is to a large extent implemented by applications, this means that only these infrastructure components need to be fully powered which are required by certain applications.

There are solutions today that support activity control on an individual physical network segment. Those solutions are usually referred to as network management. For example, the PCT application WO 02/46895 discloses a control and regulation system for motor vehicles, wherein at least two control units connected via a data bus can be switched to specific power consumption modes in order to reduce power consumption. For this, one control unit comprises a power management module having a control program with an interface, via which data related to the specific power consumption modes can be transmitted to the control program for the optimal execution of existing applications programs. The specific power consumption modes are defined by a program in the control unit or by an external request. The control program itself comprises elements for calculating the power consumption modes required by the control unit from the power consumption data. Further, switching elements are provided which transfer the control unit from one power consumption mode to another.

Disadvantageously, the disclosed method and system can only be used for vehicles having a simple bus or network structure, particularly having only a single bus connecting all ECUs in the vehicle. In case a more complex bus structure having a plurality of network segments or infrastructure subsets is used, these subsets can only be individually controlled by the disclosed method. A possibility to activate more than one network segment with a single request is not possible. Additionally, for a Hardware (HW)-wire controlled activation of loads and/or other ECUs initiated by one ECU, only ad-hoc and application-specific solutions are known. Further, the disclosed power management module only controls the power state of an ECU, wherein the power states of loads and other control units connected and controlled by the same control unit cannot be controlled.

Another disadvantage of the existing solutions is that they are hardware dependent and strongly related to the existing infrastructure. That means, since the logical components or software components, which are necessary for executing specific applications, are not necessarily included in the same ECU in different vehicle, the logical components need to be identified for each vehicle type independently.

EP1158718 A2 discloses a network management approach for use in a vehicle to control activation of electronic control units (ECUs) networked together throughout the vehicle. The ECUs are grouped together by function into virtual networks, with each virtual network including those ECUs used in carrying out a particular control task. The virtual networks are activated using a messaging protocol that specifies which virtual network is being activated.

US2003229402 discloses a method and a device for activating and/or deactivating distributed control units, the microcomputer of a central control unit delivering corresponding activation or deactivation commands to the decentralized control units over an interface module as part of a point-to-point link.

US2006013237 discloses that in a case that a gateway unit connected with multiple networks receives mode managing data indicating an operating mode from a first network, the gateway unit sends mode managing data formed based on the received mode managing data only to control units and a gateway unit connected with a second network excluding the first network.

It is therefore object of the present invention to provide a single framework for specifying and controlling the activity of a plurality of vehicle infrastructure subsystems and thereby the power consumption of the whole vehicle, i.e. all ECUs, loads and network segments.

This object is solved by an electronic/electric vehicle infrastructure system for controlling the electronic/electric functions and/or functionalities of a vehicle according to claim 1 and a method for controlling such a system according to claim 10.

The invention is based on the main concept to provide in each ECU a special infrastructural component - a so called state change component, which is adapted to transfer the ECU, loads connected to this ECU and network segments attached to this ECU, i.e. the local infrastructure subset, into an active or inactive state. Thereby, not only the ECU but also the electronic/electric infrastructure subset can be transferred into an active or inactive state. Additionally, all those state change components are adapted to exchange information about the currently required vehicle activity, whereby the required vehicle activity is defined by global vehicle modes, such as parking, living, or running, or by predefined needs of applications. Furthermore, each state change component can request the transfer of one or more further infrastructural subsets into an active or inactive state. The state change information is propagated in the vehicle by the state change components transmitting the state transfer request to all ECUs, connected loads and attached network segments that are affected by the state transfer request.

The state change component itself can be a software element, particularly a middleware element, adapted to be executed by a software controlled element, such as a microprocessor or a CPU, comprised in the ECU, and/or a hardware logic element comprised by the ECU or the ECU's software controlled element, such as a programmable logic device or a field programmable gate array.

According to a preferred embodiment of the invention, an ECU can have at least two inactive states which differ by power consumption and/or response time. That means, e.g. if an ECU has two inactive states, a stand-by state and a sleep state, the power consumption of the stand-by state could be higher than the power consumption of the sleep state. But on the other hand, the response time of the ECU to requests in the stand-by state could be much quicker than in the sleep state. Further, upon receiving the transfer request, the ECU can decide into which inactive state it will transfer. In a further preferred embodiment, if there is no need for an ECU to be active, the ECU can also be instructed into which inactive state to switch to when is should become inactive. Additionally, it is possible to change this instruction at any time during run-time to reflect different needs related to power consumption and/or response time.

Which electronic/electric vehicle infrastructure subset needs to be active or whether it can be transferred in an inactive state is preferably defined by "global" vehicle modes and/or by application needs. Thereby, for each application and/or each vehicle modes a corresponding subset of needed ECU's, loads and network segments are defined in so-called activation scenarios, which are preferably stored in a look up table.

In general, the "global" vehicle modes are modes on an overall vehicle level related to the operation of the whole vehicle, which are mostly related to the vehicle's overall power consumption. An exemplary set of vehicle modes is given in the following list, wherein the power consumption increases from the beginning of the list to its end.
**Hibernate:** storage and shipping (minimum power consumption)
**Parked:** vehicle is parked
**Living:** operator is resting in the vehicle
**Accessory:** operator is sitting in the driver's seat and is about to drive away
**Pre-Running:** Powertrain nodes have been supplied, but the engine has not yet been started
**Cranking:** the engine is cranking
**Running:** engine is running (maximum power consumption).
In the following only three vehicle modes, namely Parked, Living, and Running, are exemplarily used. It goes without saying that any arbitrary number of vehicle modes can be define.

In a further preferred embodiment, the state change components are arranged in a tree hierarchical structure having a root state change component and at least one subordinate state change component, such as an intermittent state change component and/or a leaf state change component. The intermittent state change component can therefore be regarded as a superordinate state change component to at least one leaf state change component.

It is further preferred, that for each application a local state change component is defined which transmits a state transfer request to the state change components comprised in the ECUs needed by the application and/or in the ECUs connected to loads needed by the application and/or in the ECUs attached to network segments needed for the transmission of the state transfer request. Thereby, a transfer request from an application made to its local state change component is forwarded upwards to all superordinate state change components related to the request. The superordinate state change components then transmit a compiled state transfer request to all their subordinate state change components related to the request, whereby all state change components get an updated picture of the currently required infrastructure subsets and can therefore activate their ECU, connected loads and/or attached network segments, accordingly.

This network-communicated state transfer can preferably be performed by transmitting a state transfer message over the network segments attached to the ECU. Thereby, it is possible to transfer ECUs and loads into an active or inactive state which are connected to the same network segments as the ECU hosting the state change component, which has transmitted the transfer request.

As mentioned above, the activity of a specific set of vehicle function or functionalities as requested by application needs and/or vehicle modes can be captured by an activation scenario. The activation scenario is preferably hardware-independent and identifies all logical (software) components required to be active for a concerned function. Since these software components or logical components are executed by microprocessors or CPUs generally comprised in ECUs, the activation scenario also implicitly identifies all ECUs which are required to be active. When the allocation of the logical (software) components onto the ECUs is known, the necessary set of electronic/electric vehicle infrastructure subsets (ECUs, loads, network segments) required for the application or the vehicle mode can be identified in the activation scenario. Further, each activation scenario defined for a certain function and/or vehicle mode (e.g. Parked, Living and Running) specifies the required active logical components as well as conditions for their activation/deactivation.

In a further preferred embodiment, the activation scenarios are defined in the form of configuration data, which can be consulted by the state change component in each ECU at run-time. The configuration data can, without necessarily changing the ECU implementation (i.e. post-build), be updated to reflect changes in the infrastructural subsets that should be possible to activate.

In a further preferred embodiment of the invention, the activation scenarios are stored in a look-up table, preferably a static look-up table, that links the vehicle functions' needs for activation of logical components to the activation of the infrastructure required for the activation to be possible. This table can be consulted at run-time (e.g. by the state change components) to ensure the appropriate activation or the transmission of an appropriate state transfer request.

The state change component is preferably enabled to locally initiate activation of the ECU itself and its locally controlled loads, to activate a network segment the ECU is connected to, to perform a wire-controlled activation of another ECU or load, to perform a network-communicated activation of another ECU or load, and/or to request gateway activation.

For activating an ECU or load, a specific hardware wire line control can be provided which is adapted to perform an activation/deactivation of hardware wire lines, which are used as activation lines, when the state change component receives an activation request for an infrastructure subset that includes the ECU or load. For the transfer of the ECU or a load into the active or inactive state by means of the activation line, the ECU or load to be activated can be powered, e.g., using a relay solution controlled by the activation line. The ECU or load could also be woken up from the inactive state by an activation line connected to an interrupt-triggering line of e.g. a network controller or microcontroller in the ECU.

For the locally initiated activation, the state change component preferably keeps the ECU running as long as there are internal ECU application requests to run or state change components in other ECUs require it to be running. If no requests or needs are present, the ECU can be transferred into the inactive state or low power state, particularly into a shut down state, a sleep state or a stand-by state.

Preferably, the inactive state or low power state of the ECU is in relation to the current vehicle mode. At run-time, the microprocessor or the CPU of the ECU can be re-configured, whenever the vehicle mode is changed. Thereby, it is possible that the ECU can enter a specific inactive state, when it is deactivated the next time.

The different inactive states differ, as explained above, by their power consumption and/or their response time to requests. Additionally, the different inactive states define how an ECU can be reactivated. For example, an ECU in a stand-by state can be woken up by sensor activity, wherein, in a sleep state, it can be woken up only by bus traffic. That means, in the stand-by state, the ECU can monitor sensor activity, wherein, in the sleep state, the ECU can only monitor bus activity.

Additionally, for the activation of a network segment, all network segments to which an ECU is connected to can be activated by the ECU's state change component in order to make other ECUs or loads reachable.

In a further preferred embodiment, each state change component can propagate transfer requests received on one network segment or via a dedicated activation lines to other network segments or activation lines attached to the ECU. For that, the dedicated activation lines are adapted to uniquely identify the concerned infrastructural subset. In this way, it is possible to propagate transfer requests from one network segment to any other network segment via one or more (gateway) state change components.

Further advantages and preferred embodiments are described in the appending claims.

In the following the invention will be described in more detail with reference to the attached figures. The embodiments shown in the figures are exemplary only and are not intended to limit the scope of the invention thereto.

The figures show:
Figure 1: a preferred embodiment of an electronic/electric vehicle infrastructure system according to the invention comprising a plurality of infrastructure subsystems;
Figure 2: an exemplary distribution of logical (software) components executed by ECUs over a part of the electronic/electric vehicle infrastructure subsystem according to Fig. 1; and
Figure 3: a preferred embodiment for an activation scenario of more than one vehicle infrastructure subset.

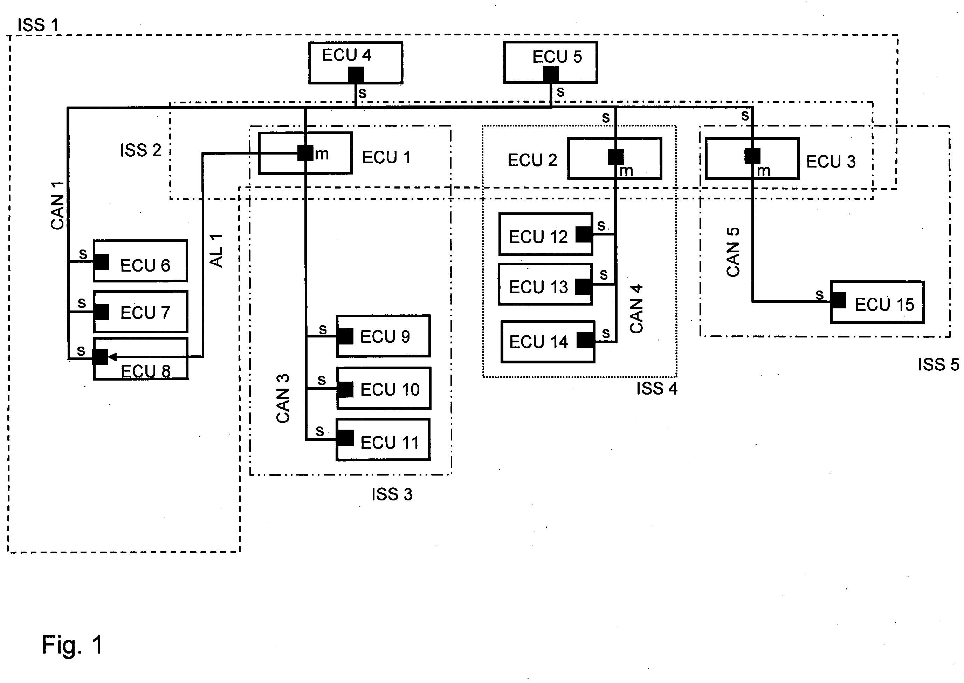

Figure 1 shows a preferred embodiment of an electronic/electric vehicle infrastructure system according to the invention comprising a plurality of infrastructure subsystems ISS, which are indicated by ISS1, ISS2, ISS3, ISS4 and ISS5. The shown five infrastructure subsets are exemplary only, since a vehicle infrastructure system can comprise easily more than 30 infrastructure subsystems. Each infrastructure subsets can comprise an arbitrary number of electronic control units (ECU1 - ECU15), loads connected to the ECU (not shown), and/or network segments (CAN1 - CAN5), particularly bus systems. In the shown embodiment a network segment is a CAN bus connecting ECUs. It should also be noted that ECUs and network segments can be part of more than one infrastructure subsystem, i.e. different infrastructure subsystems can overlap.

The vehicle's electronic/electric infrastructure provides the electric and/or electronic functions or functionalities of the vehicle which in turn can be provided by applications e.g. defined by software programs being executed in the microprocessors or CPUs of the electronic control units. Preferably, the infrastructure subset is defined as a subset of the vehicle's electronic/electric infrastructure components (ECUs, loads, network segments) which should be activated together for providing certain vehicle functions or functionalities. Since activation of a network segment also results in an activation of ECUs, it makes no sense to specify an infrastructure subset that only includes these ECUs, which, for example, cannot be activated/deactivated in relation to the activation of the network segment. To avoid that, the set of infrastructure subsystems are preferably established early in the infrastructure system design.

According to the invention, each ECU (ECU1 - ECU15) comprises a state change component which is indicated by a black rectangle in Fig. 1. The state change component is adapted to transfer the corresponding ECU into an active or inactive state. Further, the state change components are adapted to activate/deactivate loads connected to the ECU and/or attached network segments and can communicate with each other for receiving, transferring and/or executing a state transfer requests initiated by a change of the current predetermined vehicle modes and/or by application needs.

Since each application needs a specific set of logical or software components, which can be executed in the same and/or in different ECUs, for providing the application based function or functionality of the vehicle, the activation scenarios specify for each application the necessary logical components. Since the logical components can be spread over a plurality of ECUs, a map is necessary which links the needed logical components of an application to the ECUs incorporating the logical devices and to the infrastructure subsets, which comprise the corresponding ECUs. Preferably, such a map is a look-up table, which can be consulted at run-time. In a preferred embodiment, the state change component comprises a memory for storing different activation scenarios as well as such a map for the activation of infrastructure subsets.

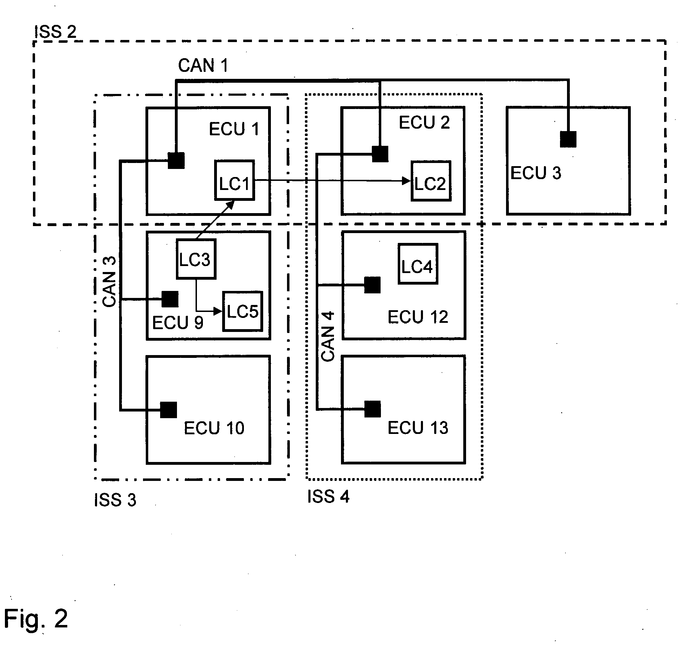

Figure 2 shows schematically, a situation where for a certain application four logical software components LC1, LC2, LC3 and LC5 are needed. The illustrated infrastructure system is only a part of the infrastructure system shown in Figure 1, comprising only ECU1, ECU2, ECU3, ECU9, ECU10, ECU12 and ECU13, wherein ECU1, ECU2 and ECU3 are defining infrastructure subset ISS2, ECU1, ECU9 and ECU10 define infrastructure subset ISS3, and ECU2, ECU12, ECU13 form infrastructure subset ISS4. The software components LC1 - LC5 are not incorporated in a single ECU but, as can be seen in the illustrated example, are incorporated in ECU1 (LC1), ECU2 (LC2) and ECU9, whereby ECU9 comprises two software components (LC3 and LC5). LC4 is incorporated in ECU12 and need not be activated. For executing the application, therefore infrastructure subsets ISS2 and ISS3 need to be activated, wherein ISS4 can remain in an inactive state. As soon as ECU1, ECU2 and ECU9 are activated, they can execute software components LC1 - LC3, and LC5, so that the application can be performed.

In the following table, the infrastructure subsets and their corresponding ECUs and connecting CAN busses as illustrated in Figure 1 are indicated. Additionally, Figure 1 and the table show that at least two ECUs can be coupled by a direct hardware wire. In the present embodiment ECU1 and ECU8 are connected to each other by a direct dedicated activation line AL1.

| **ISS** | **ECUs** | **Network segments** | **HW Lines** |
|---|---|---|---|
| ISS1 | ECU1, ECU2, ECU3, ECU4, ECU5, ECU6, ECU7, ECU8, | CAN1 | AL1 |
| ISS2 | ECU1, ECU2, ECU3 | CAN1 | - |
| ISS3 | ECU1, ECU9, ECU10, ECU11 | CAN3 | - |
| ISS4 | ECU2, ECU12, ECU13, ECU14 | CAN4 | - |
| ISS5 | ECU3, ECU15 | CAN5 | - |

Preferably, the ECUs and therefore also the state change components are arranged in a hierarchical tree structure, as illustrated in Fig. 1, where ECU1 can be regarded as root or master ECU. ECU 2 and ECU3 can be regarded as intermediate tree nodes to ECU1, wherein ECU4 and ECU 5 as well as ECU 6, ECU7, ECU8, and ECU9, ECU 10, ECU11 can be regarded as leaf nodes to ECU1. An intermediate node tree node is i.e. an ECU acting as slave to a superordinate ECU and as master to at least one subordinate ECU, wherein a leaf node is i.e. an ECU with only one communication link, thereby having only superordinate ECUs. The intermediate nodes ECU 2 and ECU 3 themselves act as master for their leaf nodes ECU 12, ECU13, ECU14, and ECU 15, respectively. The ECUs and thereby also the state change components are connected via network segments CAN1, CAN2, CAN3 and CAN4 to each other, which are e.g. data bus systems, particularly CAN busses.

Instead of a hierarchical tree structure, as described above, it is also possible to use a structure in which between any pair of ECUs, or state change components, in the vehicle, there is exactly one communication path for exchanging data, particularly state transfer requests. That means, a case in which two ECUs are connected to the same two data buses does not exist. The rationale for this is that, if there would be more than one path, then a state transfer request could be sent between two ECUs for an infinite amount of time as there is no way to know when all ECUs have received the request. If there is only one path, the transmission of the request will automatically stop when the request reaches a leaf node. In this particular case, it is sufficient for each state change component to propagate an incoming activation request only on one communication link (e.g. a data bus or a hardwired link) to all other communication links it is connected to provided that they are part of the infrastructure subset specified by the activation request.

The above described hierarchical tree structure for the ECUs also defines the hierarchical tree structure of the state change components incorporated in the ECU. That means e.g. the state change component incorporated in root ECU1 is also defined as root state change component. Thereby it acts as master m to subordinated intermediated state change components incorporated in ECU2 and ECU 3 as well as to leaf state change components in ECU4 and ECU 5 as well as in ECU 6, ECU7, ECU8, and ECU9, ECU10, ECU11, and so on.

Even if ECU 1 acts as master to all other ECUs, it must not be incorporated in the same infrastructure subset as its subordinate ECUs. As can be seen in Fig. 1, infrastructure subset ISS1 connects by means of network segment CAN1, master ECU1 and the subordinate ECU2, ECU3, ECU4, ECU 5 as well as ECU6, ECU7, ECU8. A different infrastructure subset ISS2 is defined for ECU1, ECU2, and ECU3, which are also connected by CAN1. Further, infrastructure subsets ISS4 and ISS5, respectively, do not comprise master ECU 1 at all, but still can be defined as infrastructure subset. Propagation of activation requests are always limited to be within the infrastructure subsets that are requested, in order to avoid waking up (activating) the whole vehicle whenever an state transfer request is made. This also means that a state change component is only aware of the state transfer requests related to infrastructure subsets that its hosting ECU is part of.

It can be further seen in Figure 1, that the intermediate nodes ECU2 and ECU3 and thereby also the incorporated state change components are slave s to the master ECU1, but act as master m to their directly connected leaf nodes ECU12, ECU13, ECU14, and ECU15, respectively..

Transfer requests made by applications or vehicle modes for transferring any infrastructure subset ISS into an active or inactive state are always made to a local state change component incorporated in the same ECU as the requesting logical (software) component. In order to inform all other ECUs and state change components, respectively, of the state transfer, the request is forwarded upwards in the hierarchy to all superordinate state change components as required for the request. That means if transfer request is initiated from e.g. ECU15, its incorporated and thereby local state change component transfers ECU15 in an active state (a requesting ECU must always be included in the transfer request and, consequently, ECU15 should become active itself as a part of the ISS activation) and then forwards the transfer request to its superordinate state change component incorporated in ECU3. The state change component of ECU3 then forwards the transfer request to its superordinate state change component which is root state change component incorporated in ECU1. The root state change component then sends compiled request information downwards to all subordinated state change components incorporated in ECU4, ECU5, ECU6, ECU, 7, ECU8, ECU9, ECU10, ECU11 and ECU2, ECU3, which in turn forward the request to their subordinated state change component incorporated in ECU12, ECU13, ECU 14 and back to the state change component ECU15. In this way, all state change components will have an updated picture of the currently active infrastructure subset ISS5 and can activate - if needed or requested - their local infrastructure, namely the hosting ECU and the loads attached to the ECU, accordingly.

Upon receiving information that an infrastructure subset has been transferred in the inactive state, the state change component in the concerned ECU will decide whether, as a result of the inactivation of the infrastructure subset, the ECU shall become inactive or not. It should be noted that an ECU can only become inactive if there are no pending requests in which it is included. An inactivation request can be triggered by e.g. global vehicle modes such as the vehicle is parked or if an ECU is not requested for a certain amount of time. Further, it is possible to define a plurality of inactive states for an ECU, which differ by power consumption and/or response time to requests.

For example, three ECU states can be defined - an active state and two inactive states, e.g. a stand-by state and a sleep state. Each state defines the tasks or functions an ECU can perform. In the active state, the ECU is fully powered and all possible ECU functions are provided if requested. The active state is typically used during the global vehicle state "Running".

In the inactive state, only inputs (e.g. sensor input or data buses) connected to the ECU and related to selected or no ECU functions can trigger a change to the active state. In case the function is requested (i.e. inputs related to the function triggers the ECU), it takes a certain amount of time until the ECU responds. This response time can even be noticeable by a driver. Inactive states are typically used, if the vehicle is parked or in storage. Since there are scenarios in which the vehicle is not driving, but the driver is still inside, it is not desirable that certain vehicle function are not possible to activate any more, or it takes a noticeable amount of time to activate a function. E.g. in case a driver waits for a passenger with the vehicle not running, he/she might want to listen to music. Then, a driver might be annoyed, if the radio ON/OFF button only responses after some time. On the other hand in case the driver has just entered the vehicle, a noticeable response time for the ON/OFF button of the radio might be acceptable.

Consequently, the invention suggests defining at least two inactive states, wherein e.g. in case of a two-inactivity state embodiment a stand-by state and a sleep state are defined. The stand-by state can e.g. be used in case the vehicle is not running but the driver is still inside. The overall goal of this state is to save power by deactivating ECU functions. The ECUs can be adapted to enter the stand-by state after typically few seconds of inactivity. In the stand-by state, the ECU is still able to detect a function request from a driver or the vehicle itself, and can be transferred to the active state in reasonable short amount of time.

The sleep state can be typically be used if the vehicle is parked or in storage. The overall goal of this state is also to save power, but to a much higher amount than in the stand-by state, whereby the ECU functions are not active and not even requestable. In this state the ECU is not able to directly (on its own) detect a function request by driver or vehicle, and can be transferred to the active state only in a noticeable amount of time after being woken up by bus communication from other ECUs.

In the following table the three different states of ECUs and their characteristics are shown, wherein the active state is compared to two inactive states - a stand-by state and a sleep state.

| **ECU State** | **Active state** | **Inactive state** | |
|---|---|---|---|
| | | **Stand-by** | **Sleep** |
| **ECU function** | All ECU functions enabled (i.e. their function-related inputs connected to the ECU are active); All functions active, if allowed by its conditions | Only selected ECU functions enabled (i.e. their function-related inputs connected to the ECU can wake it up); Functions not active | ECU functions disabled (i.e. no function-related inputs connected to the ECU can wake it up) |
| **Digital & Analog Input handling** | All ECU inputs | Only selected ECU inputs | No ECU inputs |
| **Output engagement** | All ECU outputs | ECU outputs cannot be handled | ECU outputs cannot be handled |
| **Communication Data bus interfaces** | Broadcast and receive data | Monitor I/O and bus activity | Monitor bus activity |
| **State entering possibilities** | - Internal ISS request | - No internal or external ISS requests | - No internal or external ISS requests |
| | - External ISS request (via digital input or data communication bus info) | - ECU instructed to go to this state when becoming inactive | - ECU instructed to go to this state when becoming inactive |
| **State leaving possibilities** | Internal ISS request | - Internal ISS request (after being woken up by I/O) | - Internal ISS request (after being woken up data communication bus) |
| | - External ISS request (via digital input or data communication bus info) | - External ISS request (via digital input or data communication bus info) | - External ISS request (via data communication bus info) |

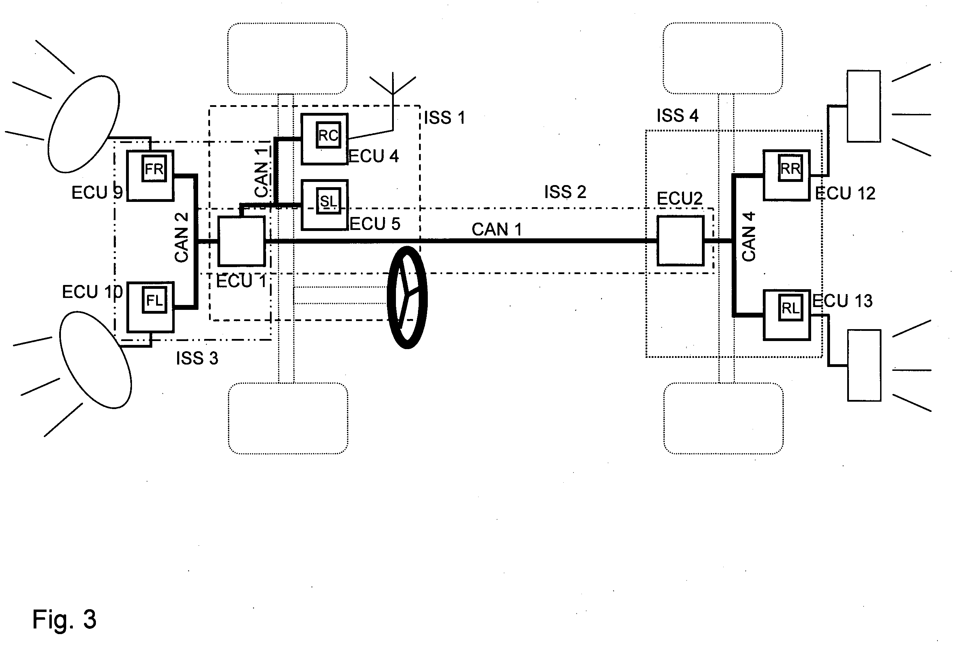

In Figure 3, an activation scenario of a subset of state change components and their corresponding ECUs and loads is described in more detail. Thereby, the components of the vehicle infrastructure system as shown in Figure 1 are exemplarily related to a special vehicle function, namely a security light function. Thereby, the vehicle's surroundings are illuminated in order to detect an intrusion or an intrusion attempt. The security light function can e.g. be triggered by a remote activation.

The logical or software components for performing the security light function are e.g. a security light controller (SL) for performing the function, a front right light control FR, a front left light control FL, a rear right light control RR, and a read left light control RL, for illuminating the vehicle, and a remote communication control RC for receiving an external request for initiating the security light function. For performing the security light function, all these components and the ECUs comprising the logical components need to be active. Therefore the corresponding activation scenario defines that for performing the security light function the logical component set of {RC, SL, FL, FR, RR, RL} need to be activated. The mapping/allocation of the activation scenario onto infrastructure further defines that the indicated logical components are included in a corresponding set of ECUs {ECU4, ECU5, ECU10, ECU9, ECU12, ECU13}. All these ECUs need to be activated for performing the security light function. It should be noted that each activation scenario can be specified independently of the vehicle's infrastructure subsystem and that a mapping onto infrastructure activation can be made as soon as the allocation of logical components in the ECUs is known. Therefore the application scenario can be used for a plurality of vehicles.

Since the necessary ECUs are not necessarily in the same infrastructure subset, the activation scenario also links the necessary ECUs to the network segments which need to be activated. As illustrated in Fig. 1, ECU 4 and ECU5 are part of infrastructure subsystem ISS1, wherein ECU9 and ECU 10 are part of infrastructure subsystem ISS3, and ECU12 and ECU13 are part of infrastructure subsystem ISS4. Since ISS 1 and ISS3 both comprise the same superordinate ECU1, activation of infrastructure ISS1 also activates ECU1 which in turn can activate infrastructure subsystem ISS3. But, ECU12 and ECU13 cannot be directly activated by ECU1, as they are not directly connected to it. ECU12 and ECU13 are slaves to ECU2 which is subordinated to ECU1. Unfortunately, ECU2 is comprised in a further infrastructure subsystem ISS2. Consequently, for activating ECU12 and ECU 13, it is necessary to firstly activate ISS2 and ECU2, and then ISS4 which the comprised ECU12 and ECU13.

The activation scenario for performing security light illumination is triggered by an external request received by ECU4 comprising RC. ECU4 comprising RC then transmits a need for activation the security lights are transmitted to the security light controlling ECU5. ECU5 consults the activation scenario stored in a look-up table and then transmits a state transfer request, particularly an activation request, to its superordinate ECU1. ECU1 in turn transmits the request to ECU9, ECU10 and ECU2, whereby ECU2 further transmits the state transfer request to ECU12 and ECU13. In the end, all necessary ECUs are activated.

The communication of transfer requests can, for example, be performed by using an already existing network management as a transport media (by e.g. embedding the information in the network management messages usually sent by the network management) but all other distribution possibilities can be used.

The invention can be made an integral part of any ECU and/or system configuration tools. Furthermore, it is possible to re-use the implementation of the infrastructure and application activation as specific components to be embedded in each ECU.

In addition use of the invention allows standardisation of specification, design and implementation of the activation of all applications, loads, network segments and ECUs in the whole vehicle. This will reduce integration problems due to application-specific sub-system solutions. It will also be possible to re-use application and middleware software to a larger extent. Full traceability of function activity down to implementation will be possible. Furthermore, configuration of the infrastructure use (ECUs and networks) due to changed application activation needs can be automatically generated from the updated application descriptions and will normally require no changes in the infrastructure as this is controlled by configuration data in the ECUs.

## Claims

1. An electronic/electric vehicle infrastructure system for controlling the electronic/electric functions and/or functionalities of a vehicle, said vehicle infrastructure system comprising one or more electronic/electric vehicle infrastructure subsets (ISS1, ISS2, ISS3, ISS4, ISS5) each comprising a plurality of electronic/electric vehicle infrastructure elements, wherein an electronic/electric infrastructure element is an electronic control unit (ECU), a network segment (CAN1) and/or a load, and at least one electronic/electric vehicle infrastructure element is transferable in an active or inactive state, and wherein the electronic/electric functions and/or functionalities are defined by predetermined vehicle modes and/or application-specific contexts,
**characterised in that**
each ECU comprises a state change component for transferring the ECU, at least one connected load and/or at least one network segment attached to the ECU into an active or inactive state, wherein each state change component is adapted to receive, transfer and/or execute a state transfer request initiated by a change of the current predetermined vehicle mode and/or by application needs,
and **in that** said electronic/electric functions and/or functionalities of the vehicle are provided by applications, each needing a specific set of logical components, which are allocated on the ECUs of said vehicle infrastructure system, wherein activation scenarios specify for each application the necessary logical components (LC1, LC2, LC3, LC5),
and wherein said electronic/electric vehicle infrastructure system further includes a map which links the needed logical components of an application to the ECUs incorporating the logical devices and to the infrastructure subsets, which comprise the corresponding ECUs.

2. The system according to claim 1, wherein the state change component is a (software) element adapted to be executed by a software controlled element, such as a microprocessor or a CPU, comprised in the ECU, and/or a hardware logic element comprised by the ECU or the ECU's software controlled element, such as a programmable logic device or a field programmable gate array.

3. The system according to claim 1 or 2, wherein for each electronic/electric vehicle infrastructure element at least two inactive states are defined which differ in a power consumption of the electronic/electric vehicle infrastructure element and/or a response time of the electronic/electric vehicle infrastructure element.

4. The system according to any preceding claim, wherein for each application and/or each vehicle mode a corresponding infrastructure subset of needed ECUs, loads and network segments are defined, particularly by the definition of an activation scenario, which is preferably stored in a look up table in each ECU.

5. The system according to claim 4, wherein the activation scenario further identifies the logical components required for each application and/or each vehicle mode, wherein this identification is preferably a mapping and/or a configuration of the activation scenario onto the infrastructure subset activation.

6. The system according to any preceding claim, wherein the ECU further comprises a digital input/output component for receiving/transmitting the transfer request and/or a COM control component being in communication with the state change component for activating/deactivating a network segment, particularly a data bus system comprising wired and wireless ports.

7. The system according to any preceding claim, wherein the state change components are arranged in a hierarchical tree structure comprising a root state change component, at least one intermittent state change component and/or at least one leaf state change component, and/or wherein the electronic/electric vehicle infrastructure is arranged in a hierarchical tree structure, wherein optionally the hierarchical tree structure of the state change components and the hierarchical tree structure of the vehicle infrastructure differ.

8. The system according to claim 7, wherein for each application a local state change component is defined, which is adapted to transmit/receive the state transfer request to/from a superordinate state change component.

9. The system according to any preceding claim, further comprising a vehicle mode master comprising the predetermined vehicle modes, particularly parked, living and/or running, stored in a look up table, wherein preferably the vehicle mode master is in communication with the root state change component for distributing the predetermined vehicle mode to all subordinated state change components.

10. Method for transferring an electronic/electric vehicle infrastructure system for controlling the electronic/electric functions and/or functionalities of a vehicle into an active or inactive state, wherein the electronic/electric vehicle infrastructure system comprises at least two electronic/electric vehicle infrastructure subsets each comprising a plurality of electronic/electric vehicle infrastructure elements, wherein an electronic/electric infrastructure element is an electronic control unit (ECU), a network segment and/or a load, and at least one electronic/electric vehicle infrastructure element is transferable in an active or inactive state, and wherein the electronic/electric functions and/or functionalities are defined by predetermined vehicle modes and/or application-specific contexts,
**characterised in that**
each ECU comprises a state change component for transferring the ECU, at least one connected load and/or at least one network segment attached to the ECU into an active or inactive state, wherein each state change component is adapted to communicate with each other, the method comprising the steps of:
• receiving by means of the state change component a transfer request initiated by a change of the current predetermined vehicle mode or by application needs;
• transferring by means of the state change component the transfer request to another state change component; and/or
• executing by means of the state change component the transfer request by transferring the ECU, at least one connected load and/or at least one network segment attached to the ECU into an active or inactive state, and
**in that** said electronic/electric functions and/or functionalities of the vehicle are provided by applications, each needing a specific set of logical components, which are allocated on the ECUs of said vehicle infrastructure system, wherein activation scenarios specify for each application the necessary logical components (LC1, LC2, LC3, LC5),
wherein said electronic/electric vehicle infrastructure system further includes a map which links the needed logical components of an application to the ECUs incorporating the logical devices and to the infrastructure subsets, which comprise the corresponding ECUs.

11. The method according to claim 10, wherein an electronic/electric vehicle infrastructure system according to any one of claims 1 to 9 is used.

12. The method according to claim 10 or 11, wherein for each application and/or each vehicle mode a corresponding infrastructure subset of needed ECU's, loads and network segments are defined, particularly by the definition of an activation scenario, which is preferably stored in a look up table in each ECU.

13. The method according to claim 12, wherein the activation scenario further identifies the logical components required for each application and/or each vehicle mode, wherein this identification is preferably performed by a mapping and/or by a configuration of the activation scenario onto the infrastructure subset activation

14. The method according to any one of claims 10 to 13, wherein for each application a local state change component is defined which transmits a transfer request to the state change components comprised in the ECUs needed by the application and/or the ECUs connected to loads needed by the application and/or the ECU's attached to network segments needed for the transmission of the state transfer request.

15. The method according to any one of claims 10 to 14, wherein the vehicle mode, particularly parked, living and/or running, is communicated to a root state change component which transmits a transfer request to all state change components.

## Patentansprüche

1. Elektronisches/elektrisches Fahrzeuginfrastruktursystem zum Steuern der elektronischen/elektrischen Funktionen und/oder Funktionalitäten eines Fahrzeugs, wobei das Fahrzeuginfrastruktursystem eine oder mehrere elektronische/elektrische Fahrzeuginfrastruktur-Teilmengen (ISS1, ISS2, ISS3, ISS4, ISS5) aufweist, welche jeweils mehrere elektronische/elektrische Fahrzeuginfrastrukturelemente umfassen, wobei ein elektronisches/elektrisches Infrastrukturelement eine Elektroniksteuereinheit (ECU), ein Netzwerksegment (CAN1) und/oder eine Last ist, und mindestens ein elektronisches/elektrisches Fahrzeuginfrastrukturelement in einen aktiven oder inaktiven Zustand transferierbar ist, und wobei die elektronischen/elektrischen Funktionen und/oder Funktionalitäten durch vorbestimmte Fahrzeugmodi und/oder applikationsspezifische Kontexte definiert sind,
**dadurch gekennzeichnet, dass**
jede ECU eine Zustandsänderungskomponente zum Transferieren der ECU, mindestens einer angeschlossenen Last und/oder mindestens eines an die ECU angehängten Netzwerksegments in einen aktiven oder inaktiven Zustand umfasst, wobei jede Zustandsänderungskomponente dazu eingerichtet ist, eine Zustandstransferanforderung, die von einer Änderung des aktuellen vorbestimmten Fahrzeugmodus und/oder durch Applikationsbedürfnisse initiiert wurde, zu empfangen, zu transferieren und/oder auszuführen,
und dadurch, dass die elektronischen/elektrischen Funktionen und/oder Funktionalitäten des Fahrzeugs von Applikationen bereitgestellt werden, von denen jede eine spezifische Menge von Logikkomponenten benötigt, welche auf den ECUs des Fahrzeuginfrastruktursystems allokiert sind, wobei Aktivierungsszenarien für jede Applikation die benötigten Logikkomponenten (LC1, LC2, LC3, LC5) spezifizieren,
und wobei das elektronische/elektrische Fahrzeuginfrastruktursystem ferner eine Zuordnung aufweist, welche die benötigten Logikkomponenten einer Applikation mit den die logischen Einrichtungen verkörpernden ECUs und mit den Infrastruktur-Teilmengen, welche die entsprechenden ECUs umfassen, verknüpft.

2. System nach Anspruch 1, wobei die Zustandsänderungskomponente ein (Software-)Element ist, das dazu eingerichtet ist, von einem softwaregesteuerten Element, wie etwa von einem Mikroprozessor oder einer CPU, welche in der ECU umfasst ist, und/oder von einem Hardwarelogikelement, welches von der ECU oder dem softwaregesteuerten Element der ECU umfasst ist, wie etwa einer programmierbaren Logikeinrichtung oder einem feldprogrammierbaren Gatterfeld, ausgeführt zu werden.

3. System nach Anspruch 1 oder 2, wobei für jedes elektronische/elektrische Fahrzeuginfrastrukturelement mindestens zwei inaktive Zustände definiert sind, welche sich hinsichtlich einer Leistungsaufnahme des elektronischen/elektrischen Fahrzeuginfrastrukturelements und/oder einer Reaktionszeit des elektronischen/elektrischen Fahrzeuginfrastrukturelements unterscheiden.

4. System nach einem der vorhergehenden Ansprüche, wobei für jede Applikation und/oder jeden Fahrzeugmodus eine entsprechende Infrastruktur-Teilmenge benötigter ECUs, Lasten und Netzwerksegmente definiert ist, insbesondere durch die Definition eines Aktivierungsszenarios, welches vorzugsweise in einer Nachschlagtabelle in jeder ECU gespeichert ist.

5. System nach Anspruch 4, wobei das Aktivierungsszenario ferner die Logikkomponenten identifiziert, die für eine jeweilige Applikation und/oder einen jeweiligen Fahrzeugmodus erforderlich sind, wobei diese Identifizierung vorzugsweise eine Abbildung und/oder eine Konfiguration des Aktivierungsszenarios auf die Infrastruktur-Teilmengen-Aktivierung ist.

6. System nach einem der vorhergehenden Ansprüche, wobei die ECU ferner eine Digitaleingabe-/-ausgabekomponente zum Empfangen/Übertragen der Transferanforderung und/oder eine COM-Steuerkomponente umfasst, die mit der Zustandsänderungskomponente zum Aktivieren/Deaktivieren eines Netzwerksegments, insbesondere eines Datenbussystems mit drahtlosen und drahtlosen Anschlüssen, in Kommunikation ist.

7. System nach einem der vorhergehenden Ansprüche, wobei die Zustandsänderungskomponenten in einer hierarchischen Baumstruktur angeordnet sind, die eine Wurzel-Zustandsänderungskomponente, mindestens eine Zwischen-Zustandsänderungskomponente und/oder mindestens eine Blatt-Zustandsänderungskomponente umfasst, und/oder wobei die elektronische/elektrische Fahrzeuginfrastruktur in einer hierarchischen Baumstruktur angeordnet ist, wobei optional die hierarchische Baumstruktur der Zustandsänderungskomponenten und die hierarchische Baumstruktur der Fahrzeuginfrastruktur voneinander abweichen.

8. System nach Anspruch 7, wobei für jede Applikation eine lokale Zustandsänderungskomponente definiert ist, welche dafür eingerichtet ist, die Zustandstransferanforderung an/von einer übergeordneten Zustandsänderungskomponente zu übertragen/empfangen.

9. System nach einem der vorgehenden Ansprüche, ferner umfassend einen Fahrzeugmodusmaster, welcher die vorbestimmten Fahrzeugmodi, insbesondere geparkt, aktiv und/oder fahrend, in einer Nachschlagtabelle gespeichert umfasst, wobei vorzugsweise der Fahrzeugmodusmaster in Kommunikation mit der Wurzel-Zustandsänderungskomponente ist, um den vorbestimmten Fahrzeugmodus an alle untergeordneten Zustandsänderungskomponenten zu verteilen.

10. Verfahren zum Transferieren eines elektronischen/elektrischen Fahrzeuginfrastruktursystems zum Steuern der elektronischen/elektrischen Funktionen und/oder Funktionalitäten eines Fahrzeugs in einen aktiven oder inaktiven Zustand, wobei das elektronische/elektrische Fahrzeuginfrastruktursystem mindestens zwei elektronische/elektrische Fahrzeuginfrastruktur-Untermengen umfasst, von denen jede mehrere elektronische/elektrische Fahrzeuginfrastrukturelemente umfasst, wobei ein elektronisches/elektrisches Infrastrukturelement eine elektronische Steuereinheit (ECU), ein Netzwerksegment und/oder eine Last ist, und mindestens ein elektronisches/elektrisches Fahrzeuginfrastrukturelement in einen aktiven oder inaktiven Zustand transferierbar ist, und wobei die elektronischen/elektrischen Funktionen und/oder Funktionalitäten durch vorbestimmte Fahrzeugmodi und/oder applikationsspezifische Kontexte definiert sind,
**dadurch gekennzeichnet, dass**
jede ECU eine Zustandsänderungskomponente zum Transferieren der ECU, mindestens einer angeschlossenen Last und/oder mindestens eines an die ECU angehängten Netzwerksegments in einen aktiven oder inaktiven Zustand umfasst, wobei die einzelnen Zustandsänderungskomponenten dazu eingerichtet sind, miteinander zu kommunizieren, wobei das Verfahren die Schritte umfasst:
• Empfangen, mittels der Zustandsänderungskomponente, einer Zustandstransferanforderung, die von einer Änderung des aktuellen vorbestimmten Fahrzeugmodus oder durch Applikationsbedürfnisse initiiert wurde;
• Transferieren, mittels der Zustandsänderungskomponente, der Transferanforderung an eine andere Zustandsänderungskomponente; und/oder
• Ausführen, mittels der Zustandsänderungskomponente, der Transferanforderung mittels Transferieren der ECU, mindestens einer angeschlossenen Last und/oder mindestens eines an die ECU angehängten Netzwerksegments in einen aktiven oder inaktiven Zustand, und
dadurch, dass die elektronischen/elektrischen Funktionen und/oder Funktionalitäten des Fahrzeugs von Applikationen bereitgestellt werden, von denen jede eine spezifische Menge von Logikkomponenten benötigt, welche auf den ECUs des Fahrzeuginfrastruktursystems allokiert sind, wobei Aktivierungsszenarien für jede Applikation die notwendigen Logikkomponenten (LC1, LC2, LC3, LC5) spezifizieren,
wobei das elektronische/elektrische Fahrzeuginfrastruktursystem ferner eine Abbildung aufweist, welche die benötigten Logikkomponenten einer Applikation mit den die logischen Einrichtungen verkörpernden ECUs und mit den Infrastruktur-Teilmengen, welche die entsprechenden ECUs umfassen, verknüpft.

11. Verfahren nach Anspruch 10, wobei ein elektronisches/elektrisches Fahrzeuginfrastruktursystem nach einem der Ansprüche 1 bis 9 benutzt wird.

12. Verfahren nach Anspruch 10 oder 11, wobei für jede Applikation und/oder jeden Fahrzeugmodus eine entsprechende Infrastruktur-Teilmenge benötigter ECUs, Lasten und Netzwerksegmente definiert ist, insbesondere durch die Definition eines Aktivierungsszenarios, welches vorzugsweise in einer Nachschlagetabelle in jeder ECU gespeichert wird.

13. Verfahren nach Anspruch 12, wobei das Aktivierungsszenario ferner die für jede Applikation und/oder jeden Fahrzeugmodus erforderlichen Logikkomponenten identifiziert, wobei diese Identifizierung vorzugsweise durch eine Abbildung und/oder durch eine Konfiguration des Aktivierungsszenarios auf die Infrastruktur-Teilmengen-Aktivierung erfolgt.

14. Verfahren nach einem der Ansprüche 10 bis 13, wobei für jede Applikation eine lokale Zustandsänderungskomponente definiert ist, welche eine Transferanforderung an die Zustandsänderungskomponenten überträgt, die in den von der Applikation benötigten ECUs und/oder den mit von der Applikation benötigten Lasten verbundenen ECUs und/oder den an für die Übertragung der Zustandsänderungsanforderung benötigten Netzwerksegmente angeschlossenen ECUs umfasst sind.

15. Verfahren nach einem der Ansprüche 10 bis 14, wobei der Fahrzeugmodus, insbesondere geparkt, aktiv und/oder fahrend, an eine Wurzel-Zustandsänderungskomponente kommuniziert wird, welche eine Transferanforderung an alle Zustandsänderungskomponenten überträgt.

## Revendications

1. Système d'infrastructure de véhicule électronique/électrique pour commander les fonctions et/ou les fonctionnalités électroniques/électriques d'un véhicule, ledit système d'infrastructure de véhicule comprenant un ou plusieurs sous-ensembles d'infrastructures de véhicule électronique/électrique (ISS1, ISS2, ISS3, ISS4, ISS5) comprenant chacun une pluralité d'éléments d'infrastructure de véhicule électronique/électrique, dans lequel un élément d'infrastructure électronique/électrique est une unité de commande électronique (ECU), un segment de réseau (CAN1) et/ou une charge, et au moins un élément d'infrastructure de véhicule électronique/électrique peut être transféré dans un état actif ou inactif, et dans lequel les fonctions et/ou les fonctionnalités électroniques/électriques sont définis par des modes de véhicule prédéterminé et/ou des contextes spécifiques à une application,
**caractérisé en ce que**
chaque ECU comprend un composant de changement d'état pour transférer l'ECU, au moins une charge connectée et/ou au moins un segment de réseau rattaché à l'ECU dans un mode actif ou inactif, dans lequel chaque composant de changement d'État est adapté afin de recevoir, transférer et/ou exécuter une demande de transfert d'état amorcée par un changement du mode de véhicule prédéterminé actuel et/ou par les besoins de l'application,
et **en ce que** lesdites fonctions et/ou les fonctionnalités électroniques/électriques du véhicule sont fournies par les applications, nécessitant chacune un ensemble spécifique de composants logiques, qui sont alloués sur les ECUs desdits systèmes d'infrastructure de véhicule, dans lequel les scénarios d'activation spécifient pour chaque application les composants logiques nécessaires (LC1, LC2, LC3, LC5),
et dans lequel ledit système d'infrastructure de véhicule électronique/électrique inclut en outre une carte qui relie les composants logiques nécessaires à une application aux ECUs incorporant les dispositif logique et aux sous-ensembles d'infrastructure, qui comprennent les ECUs correspondants.

2. Système selon la revendication 1, dans lequel le composant de changement d'État est un élément (logiciel) adapté pour être exécuté par un élément commandé par logiciel, tel qu'un microprocesseur ou une unité centrale, compris dans l'ECU, et/ou un élément logique matériel compris par l'ECU ou un élément commandé par le logiciel de l'ECU, tel qu'un dispositif logique programmable ou un réseau de portes logiques programmable.

3. Système selon la revendication 1 ou 2, dans lequel pour chaque élément infrastructure de véhicule électronique/électrique au moins deux états inactifs sont définis qui diffèrent en ce qui concerne une consommation électrique de l'élément d'infrastructure de véhicule électronique/électrique et/ou un temps de réponse de l'élément d'infrastructure de véhicule électronique/électrique.

4. Système selon une quelconque des revendications précédentes, dans lequel pour chaque application et/ou chaque mode de véhicule un sous-ensemble d'infrastructure correspondant des ECUs nécessaires et segments de charges nécessaires sont définis, notamment par la définition d'un scénario activation, qui est de préférence mémorisé dans une table de recherche dans chaque ECU.

5. Système selon la revendication 4, dans lequel le scénario d'activation identifie en outre les composants logiques nécessaires pour chaque application et/ou chaque mode de véhicule, dans lequel cette identification est de préférence une mise en correspondance et/ou configuration du scénario d'activation sur l'activation du sous-ensemble d'infrastructure.

6. Système selon une quelconque des revendications précédentes, dans lequel l'ECU comprend en outre un composant d'entrée/sortie numérique pour recevoir/transmettre la demande de transfert et/ou un composant de commande COM étant en communication avec le composant de changement d'état pour activer/désactiver un segment de réseau, notamment un système de bus de données comprenant des ports câblés et sans fil.

7. Système selon une quelconque des revendications précédentes, dans lequel les composants de changement d'état sont agencés en une structure d'arborescence hiérarchique comprenant un composant de changement d'état de racine, au moins un composant de changement d'état intermittent et/au moins un composant de changement d'état de feuille, et/ou dans lequel l'infrastructure de véhicule électronique/électrique est agencée en une structure d'arborescence hiérarchique, dans lequel optionnellement la structure d'arborescence hiérarchique des composants de changement d'état et la structure de l'arborescence hiérarchique de l'infrastructure de véhicules diffèrent.

8. Système selon la revendication 7, dans lequel pour chaque application un composant de changement d'état local est défini qui est adapté pour transmettre/recevoir la demande de transfert vers/depuis un composant de changement d'état supérieur.

9. Système selon une quelconque des revendications précédentes, comprenant en outre un maître de mode de véhicule comprenant les modes de véhicule prédéterminés, notamment garé, en marche et/ou en circulation, mémorisés dans une table de recherche, dans lequel de préférence le maître de mode de véhicule est en communication avec le composant de changement d'état de racine pour distribuer le mode de véhicule prédéterminé à tour les composants de changement d'état subordonnés.

10. Procédé de transfert d'un système d'infrastructure de véhicule électronique/électrique pour commander les fonctions et/ou les fonctionnalités électroniques/électriques d'un véhicule en un état actif ou inactif, dans lequel le système d'infrastructure de véhicule électronique/électrique comprend au moins deux sous-ensembles d'infrastructure de véhicule électronique/électrique comprenant chacun une pluralité d'éléments d'infrastructure de véhicule électronique/électrique, dans lequel un élément d'infrastructure électronique/électrique est une unité de commande électronique (ECU), un segment de réseau (CAN1) et/ou une charge, et au moins un élément d'infrastructure de véhicule électronique/électrique peut être transféré dans un état actif ou inactif, et dans lequel les fonctions et/ou les fonctionnalités électroniques/électriques sont définis par des modes de véhicule prédéterminé et/ou des contextes spécifiques à une application,
**caractérisé en ce que**
chaque ECU comprend un composant de changement d'état pour transférer l'ECU, au moins une charge connectée et/ou au moins un segment de réseau rattaché à l'ECU en un état actif ou inactif, dans lequel chaque composant de changement d' état est adapté pour communiquer les uns avec les autres, le procédé comprenant les étapes consistant à :
• recevoir au moyen du composant de changement d'état une demande de transfert amorcée par un changement du mode de véhicule prédéterminé actuel ou par les besoins de l'application ;
• transférer au moyen du composant de changement d'état la demande de transfert à un autre composant de changement d'état ; et/ou
• exécuter au moyen du composant de changement d'état la demande de transfert en transférant l'ECU, au moins une charge connectée et/ou au moins un segment de réseau rattaché à l'ECU en un état actif ou inactif, et
**en ce que** lesdites fonctions et/ou fonctionnalités électroniques/électriques du véhicule sont fournies par des applications, nécessitant chacune un ensemble spécifique de composants logiques, qui sont alloués sur les ECUs dudit système d'infrastructure de véhicule, dans lequel les scénarios d'activation spécifient pour chaque application les composants logiques nécessaires (LC1, LC2, LC3, LC5),
dans lequel ledit système d'infrastructure de véhicule électronique/électrique inclut en outre une carte qui relie les composants logiques nécessaires à une application aux ECUs incorporant les dispositifs logiques et aux sous-ensembles d'infrastructure, qui comprennent les ECUs correspondants.

11. Procédé selon la revendication 10, dans lequel un système d'infrastructure de véhicule électronique/électrique selon une quelconque des revendications 1 à 9 est utilisé.

12. Procédé selon la revendication 10 ou 11, dans lequel pour chaque application et/chaque mode de véhicule un sous-ensemble d'infrastructures correspondant des ECUs, charges et segments de réseau nécessaires sont définis, notamment par la définition d'un scénario d'activation qui est de préférence mémorisé dans une table de recherche dans chaque ECU.

13. Procédé selon la revendication 12, dans lequel le scénario d'activation identifie en outre les composants logiques nécessaires pour chaque application et/ou chaque mode de véhicule, dans lequel cette identification est de préférence effectuée par une mise en correspondance et/ou par une configuration du scénario d'activation sur l'activation du sous-ensemble d'infrastructure.

14. Procédé selon une quelconque des revendications 10 à 13, dans lequel pour chaque application un composant de changement d'état local est défini qui transmet une demande de transfert au composant de changement d'état compris dans les ECUs nécessaires par l'application et/ou les ECUs connectés aux charges nécessaires par l'application et/ou les ECUs rattachés aux segments de réseau nécessaires pour la transmission de la demande de transfert d'état.

15. Procédé selon une quelconque des revendications 10 à 14, dans lequel le mode de véhicule, notamment garé, en marche et/ou en circulation, est communiqué à un composant de changement d'état de racine qui transmet une demande de transfert à tous les composants de changement d'état.
